# EUROPEAN PATENT SPECIFICATION

(11) **EP 0 900 856 B1**
(45) Date of publication and mention of the grant of the patent: **13.11.2002**
(21) Application number: 97202689.2
(22) Date of filing: 02.09.1997
(51) Int. Cl.: C22C 33/02, B22F 1/00, C10M 111/00, F16C 33/12

(54) **Use of sintered stainless steel containing manganese sulphide in high temperature bearings.**
Verwendung von rostfreier gesinterten Stahlegierung mit mangan sulphi für hochtemperaturbeanspruchte Lager.
Utilisation d'acier inoxydable fritté avec du sulfure de manganèse pour paliers fonctionnement à haute températur.

(43) Date of publication of application: 10.03.1999
(73) Proprietor: Federal-Mogul Technology Limited, Rugby, Warwickshire CV22 7SB (GB); Federal-Mogul Deva GmbH, 35260 Stadtallendorf (DE)
(72) Inventor: Fox, Katharine Margaret, Bilton, Rugby, Warwickshire CV22 7EW (GB); Roos, Udo, 35315 Homberg / Orm (DE); Schwarze, Hubert, 35037 Marburg (DE)
(74) Representative: Fuchs Mehler Weiss & Fritzsche

(56) References cited:
- PATENT ABSTRACTS OF JAPAN vol. 10, no. 235 (C-366), 14 August 1986 & JP 61 067759 A (TOYOTA MOTOR CORP.), 7 April 1986,
- PATENT ABSTRACTS OF JAPAN vol. 18, no. 468 (C-1244), 31 August 1994 & JP 06 145916 A (NIPPON PISTON RING), 27 May 1994,
- BOLTON, J.D AND GRANT, A.J.: "Heat treatment response of sintered M3/2 high speed steel composites containing additions of manganese sulphide, niobium carbide and titanium carbide" POWDER MET., vol. 39, no. 1, 1996, pages 27-35, XP000587286
- HWANG, K. -S. AND CHIOU, C. -H.: "Desulfurization of 316L stainless steel containing MnS during sintering." INT. J. POWDER METALL., vol. 30, no. 4, October 1994, TAIWAN UNIV., pages 409-412, XP002056174
- PATENT ABSTRACTS OF JAPAN vol. 18, no. 215 (C-1191), 18 April 1994 & JP 06 010103 A (HITACHI METALS LTD), 18 January 1994,

## Description

The present invention relates to the use of sintered stainless steel based material.

Known powder metal parts produced by conventional pressing and sintering processes are not well adapted for use in high temperature applications.

JP-A-61 067 759 discloses a sintered steel based material for valve seats containing 0.5 - 2.0 wt% manganese sulphide. There is no temperature given at which the wear resistance was tested. There is no hint concerning high temperature wear resistance nor the response to heavy load stress like the transport of ingots.

JP-A-61 45 916 discloses a sintered steel based material containing 0.5 - 5.0 wt% manganese sulphide. The material is used e.g. as a valve seat material. The wear resistance was measured at 200°C and 300°C. It is pointed out, that more than 5% manganese sulphide are not advisable, because the hardness and strength of the material after sintering is lowered.

Bolton, J.D. and Grant, A.J.: "Heat treatment response of sintered M3/2 high speed steel composites containing additions of manganese sulphide, niobium carbide and titanium carbide", POWDER MET:, Vol. 39, No. 1, 1996, pages 27-35, XP000587286 discloses a sintered high speed steel containing manganese sulphide. The high speed steel is very hard (about 900 Hᵥ). The wear resistance was not experimentally tested, especially not at high temperatures. The manganese sulphide content was mentioned in one Example as is being 5%.

According to the present invention a sintered stainless steel based material containing 2.5 to 30 wt% manganese sulphide is used as a bearing surface along which an ingot transporter is conveyed through an annealing furnace at high temperature. The bearing surface must support the load of the conveyor at high temperature, for example at 650°C when annealing aluminium alloy ingots.

The present invention has as an advantage the provision of load bearing sintered stainless steel based materials with improved high temperature wear characteristics.

Preferably the material also comprises 1 to 7 wt% titanium carbide.

Preferably the stainless steel is 316L having the following composition: 0.03% C, 2% Mn, 1% Si, 16 - 18% Cr, 10 - 14% Ni, 0.045% P, 0.03% S, balance Fe.

Preferably the stainless steel powder is of particle size less than 150 µm.

Preferably the manganese sulphide powder is of particle size less than 50 µm.

Said material can be manufactured by a method that comprises the steps of making a mixture of a stainless steel powder and manganese sulphide powder, the manganese sulphide comprising from 2.5 to 30 wt% of the mixture, pressing the mixture and sintering the mixture.

Preferably the mixture is sintered at 1150°C for 1 hour, preferably in a cracked ammonia atmosphere. Alternatively, the mixture may be sintered for up to 2 hours in a vacuum atmosphere. In a further alternative, the mixture may be sintered in a hydrogen/nitrogen (H₂/N₂) atmosphere.

Preferably the mixture also comprises 1 to 7 wt% titanium carbide.

The present invention will now be described, by way of example only, with reference to the following illustrative Example.

A stainless steel based powder mixture was prepared by mixing 80 wt% of 316L stainless steel powder with 20 wt% of manganese sulphide powder. The stainless steel powder was of particle size less than 150 µm. The manganese sulphide powder was of particle size less than 20 µm. The powders were thoroughly mixed using a rotating mixer. The powder mixture was then cold pressed into compacts. The compacts were then sintered at 1150°C for 1 hour in a vacuum.

The resulting sintered articles were examined to determine their optical microstructure. The structure showed manganese sulphide particles locked between particles of the stainless steel.

Physical measurements and mechanical tests were carried out on the pressed and sintered material. T he results are shown in Tables I, II and III below.

**TABLE I**

| | 316L + 20% MnS | 316L + 20% WS₂ |
|---|---|---|
| Sintered Density g/cm³ | 6.33 | 6.80 |
| Hardness HB | 138 | 134 |
| Tensile Strength N/mm² | 173 | 148 |
| Compressive Strength N/mm² | >764 | >764 |

The sintered density of the Illustrative Example represents 96% of the maximum theoretical density of the product.

A Comparative Example was prepared according to the method of the Illustrative Example except that tungsten disulphide powder was substituted for the manganese sulphide powder. The sintered density of the Comparative Example represents 87% of the maximum theoretical density of the product.

Samples of the Comparative Example and the Illustrative Example were tested by moving a fixed load (0.7 N/mm²) back and forth across the samples at a set speed (0.05 m/s), distance (40mm) and temperature (550°C). Table II compares the Illustrative Example with the Comparative Example. Table III shows the effect of increasing the number of strokes, and changing the counterface material.

**TABLE II**

| | 316L + WS2 | 316L + MnS |
|---|---|---|
| Double Strokes | 30480 | 30292 |
| Total Sliding Distance (km) | 2.438 | 2.423 |
| Counterface Material | A | A |
| Brinell hardness of counterface material | 194 HB | 194 HB |
| Friction Coefficient | 0.41 - 0.46 | 0.41 - 0.49 |
| Wear (µm) | 310 | 0 |
| Wear Rate (µm/km) | 127 | 0 |

Counterface material A comprised a steel of composition 0.2% C, 12% Ni, 20% Cr, balance Fe.

From Table II it can be seen that the Illustrative Example shows far less wear than the Comparative Example at this load and temperature.

**TABLE III**

| | 316L + 20% MnS | 316L + 20% MnS | 316L + 20% MnS |
|---|---|---|---|
| Double Strokes | 30292 | 49184 | 48500 |
| Total Sliding Distance (km) | 2.423 | 3.920 | 3.880 |
| Counterface Material | A | A | B |
| Brinell hardness of counterface material | 194 HB | 194 HB | 156 HB |
| Friction Coefficient | 0.41 - 0.49 | 0.51 - 0.56 | 0.51 - 0.57 |
| Wear (µm) | 0 | 15 | 24 |
| Wear Rate (µm/km) | 0 | 4 | 6 |

Counterface material B comprised a steel of composition 0.12% C, 6.5% Cr, 0.8% Al, balance Fe.

Thus from Table III it can be seen that increasing the total sliding distance by a little over 60% will produce a detectable wear rate (4 µm/km). The wear rate can be further increased by the use of a different counterface material - in the present instance to 6µm/km. It will be noted that this is still much lower than the wear rate of the Comparative Example.

## Claims

1. Use of sintered stainless steel based material containing 2,5 - 30 wt% manganese sulphide as bearing surface along which an ingot transporter is conveyed through an annealing furnace at high temperature.

2. Use according to claim 1 wherein the material comprises 20% wt% manganese sulphide.

3. Use according to claim 1 or 2 wherein the stainless steel is of composition 0,03% C, 2% Mn, 1% Si, 16 - 18% Cr, 10 - 14% Ni, 0,045% P, 0,03% S, balance Fe.

4. Use according to one of claims 1 to 3 wherein the material also comprises 1 to 7 wt% titanium carbide.

## Patentansprüche

1. Verwendung von auf gesintertem rostfreiem Stahl basierendem Material, das 2,5-30 Gew.-% Sulfid enthält als Lageroberfläche, entlang welcher ein Barrentransportierer durch einen Temperofen bei hoher Temperatur befördert wird.

2. Verwendung nach Anspruch 1, wobei das Material 20 Gew.-% Mangansulfid enthält.

3. Verwendung nach Anspruch 1 oder 2, wobei der rostfreie Stahl aus einer Zusammensetzung von 0,03% C, 2% Mn, 1% Si, 16-18% Cr, 10-14% Ni, 0,045% P, 0,03% S, Resteisen besteht.

4. Verwendung nach irgendeinem der Ansprüche 1-3, wobei das Material ebenfalls 1-7 Gew.-% Titancarbid umfaßt.

## Revendications

1. Utilisation d'un matériau à base d'acier inoxydable fritté contenant 2,5-30% en poids de sulfure de manganèse comme surface de support le long de laquelle un transporteur de lingots est acheminé dans un four de recuit à température élevée.

2. Utilisation selon la revendication 1, dans laquelle le matériau comprend 20% en poids de sulfure de manganèse.

3. Utilisation selon la revendication 1 ou 2, dans laquelle l'acier inoxydable a la composition suivante : 0,03% de C, 2% de Mn, 1% de Si, 16-18% de Cr, 10-14% de Ni, 0,045% de P, 0,03% de S, le reste étant du Fe.

4. Utilisation selon l'une quelconque des revendications 1 à 3, dans laquelle le matériau comprend également 1 à 7% en poids de carbure de titane.
